(19) **Europäisches Patentamt**
**European Patent Office**
**Office européen des brevets**

(11) **EP 2 816 511 A1**

(12) **EUROPEAN PATENT APPLICATION**

(43) Date of publication:
24.12.2014 Bulletin 2014/52

(51) Int Cl.:
$G06Q\ 10/04$ (2012.01)     $G06Q\ 30/02$ (2012.01)
$G06Q\ 50/00$ (2012.01)

(21) Application number: 13305849.5

(22) Date of filing: 21.06.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **CARON, Stéphane
750005 Paris (FR)**
• **Bhagat, Smriti
San Francisco, CA 94105 (US)**

(74) Representative: **Huchet, Anne
Technicolor
1, rue Jeanne d'Arc
92443 Issy-les-Moulineaux Cedex (FR)**

(54) **Method for cold start of a multi-armed bandit in a recommender system**

(57)     A method performed by a recommender system to recommend items to a new user includes calculating reward estimates from multiple multi-armed bandit models of a user and her social network friends. The new user's social network friends have multi-armed bandit models that are well established. The mixed multi-armed bandit estimates are processed to select the arm that maximizes the estimated reward to the new user. The multi-armed bandit arm of the greatest reward estimate is played and the new user responds by providing feedback so that the new user's multi-armed bandit model is updated as time progresses.

**200**

Fig. 2

**Description**

**FIELD**

The present invention relates generally to the data mining. More specifically, the invention relates to the determination of recommendations of items to users via the use of a Multi-Armed Bandits and Social Networks.

**BACKGROUND**

Collaborative filtering methods are widely used by recommendation services to predict the items that users are likely to enjoy. These methods rely on the consumption history of users to determine the similarity between users (or items), with the premise that similar users consume similar items. Collaborative filtering approaches are highly effective when there is sufficient data about user preferences. However, they face a fundamental problem when new users who have no consumption history join the recommendation service. A new user needs to enter a significant amount of data before collaborative filtering methods start providing useful recommendations. The specific problem of recommending items to new users is referred to as the "cold-start" recommendation problem.

Collaborative filtering algorithms are the de-facto standard in recommender systems. These methods recommend an item i to a user u if the item is liked by other users whose preferences are similar to that of u. Since they rely on the historical ratings or preferences provided by users, their performance is poor for cold-start users. The present invention addresses the cold start recommendation problem using a novel approach that does not involve collaborative filtering methods.

**SUMMARY**

This summary is provided to introduce a selection of concepts in a simplified form that are further described below in the Detailed Description. The Summary is not intended to identify key features or essential features of the claimed subject matter, not is it intended to be used to limit the scope of the claimed subject matter.

The present invention includes a method performed by a recommender system to recommend items to a new user. The method includes receiving a request to provide a new user with a recommendation for an item. Reward estimates are calculated using both user reward estimates for recommendation items using a multi-armed bandit model of the user and neighbor reward estimates for recommendation items using a multi-armed bandit model of at least one user neighbor in a social network of the new user. From the mixture of reward estimates from the plurality of multi-armed bandits, a recommendation item is selected. The selected recommendation item is sent to the new user and the new user provides feedback to the recommender system such that the new user's multi-armed bandit is updated. The invention is useful in cold start situations with a new user's multi-armed bandit model.

Additional features and advantages of the invention will be made apparent from the following detailed description of illustrative embodiments which proceeds with reference to the accompanying figures.

**BRIEF DESCRIPTION OF THE DRAWINGS**

The foregoing summary of the invention, as well as the following detailed description of illustrative embodiments, is better understood when read in conjunction with the accompanying drawings, which are included by way of example, and not by way of limitation with regard to the claimed invention.

Figure 1 illustrates an example confidence interval of the MixNeigh strategy according to aspects of the invention;
Figure 2 illustrates a block diagram of an environment in which the present invention may be practiced;
Figure 3 depicts a method according to aspects of the invention;
Figure 4 depicts an example method using the MixPair strategy according to aspects of the invention;
Figure 5 depicts an example method using the MixNeigh strategy according to aspects of the invention;
Figure 6a depicts an example of origins of the MixPair strategy;

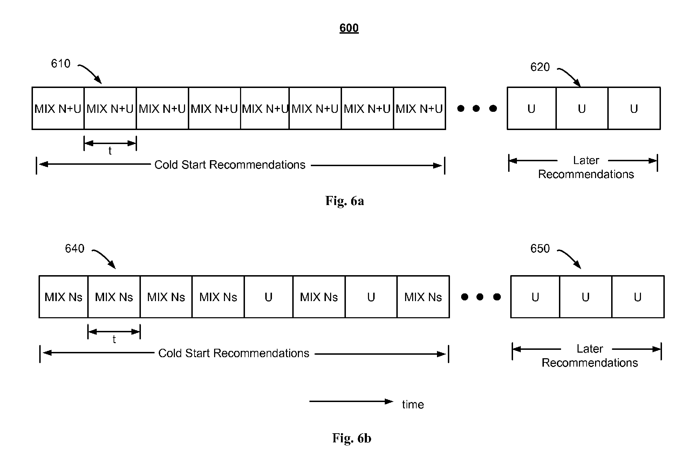

Figure 6a depicts an example of origins of the MixNeigh strategy; and

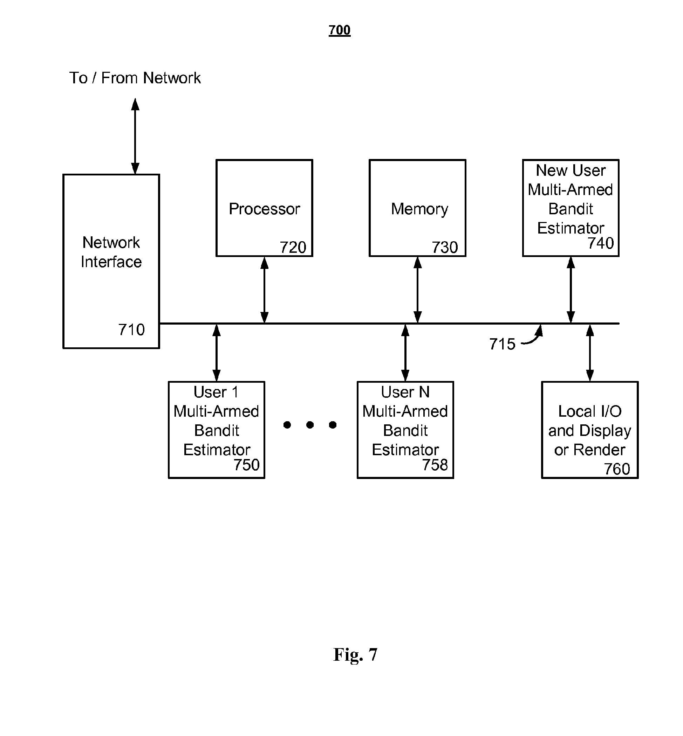

Figure 7 depicts an example block diagram of a recommender system.

**DETAILED DISCUSSION OF THE EMBODIMENTS**

In the following description of various illustrative embodiments, reference is made to the accompanying drawings, which form a part thereof, and in which is shown, by way of illustration, various embodiments in the invention may be practiced. It is to be understood that other embodiments may be utilized and structural and functional modification may be made without departing from the scope of the present invention.

Ideally, a recommender system would like to quickly learn the likes and dislikes of cold-start users (i.e., new users), while providing good initial recommendations with fewest mistakes. To minimize its mistakes, a recommender system could recommend the item predicted as the "best" from its current knowledge of the user. However, this may not be optimal as the system has very limited knowledge of a new or cold-start user. On the other hand, the system may try to gather more information about the user's preferences by recommending items that may not appear to be the "best", and learning from the user's response. This inherent tradeoff between exploration (trying out all items) and exploitation (selecting the best item so far) is aptly captured by the Multi-Armed Bandit (MAB) model.

In the MAB model, a decision maker repeatedly chooses among a finite set of K actions. At each step t, the action $a$ chosen yields a reward $X_{a,t}$ drawn from a probability distribution intrinsic to $a$ and unknown to the decision maker. The goal for the latter is to learn, as fast as possible, which are the actions yielding maximum reward in expectation. Multiple algorithms have been proposed within this framework. In particular, a family of policies based on Upper Confidence Bounds (UCBs) has been shown to achieve optimal asymptotic performances in terms of the number of steps t.

However, it is known that one can leverage side observations from the social network to provide even strong guarantees and faster learning rates. The present invention models the cold-start problem as one of learning MABs "bandits" in a graph where each node is a bandit, and neighboring bandits have "close" reward distributions. A novel strategy is proposed to improve the learning rate of "young" bandits (i.e., which have been played a small number of times) by leveraging the information from their neighbors in a network.

Some social network services such as Last.fm™ and YouTube™allow users to explicitly declare their social connections, while others including Hulu™, Spotify™, and Digg™, are integrated with Facebook™. Facebook™ integration provides users with the simplicity and convenience of logging in to many different services with a single Facebook™ account, and in return, the services get access to rich social data that users share on Facebook™.

In one embodiment of the invention, a recommender system can be used to recommend music to a user. Other recommendation items include but are not limited to items for rent or sale including movies, tangible products or digital products. In one example environment, users sign in to the recommender system to get item recommendations, such as a music item. In the examples which follow, a music recommender system is discussed, but one of skill in the art will recognize that other recommender systems are applicable, such as movie, tangible item, and digital items recommender systems.

In an overview of the present invention, when new users sign in to a recommender system for the first time, their social graph information is gathered. This may be from their account on social networking sites such as Facebook™, their email address books, or an interface where users can explicitly friend other users of the recommender system. Once a user is signed in, the recommender system picks an artist and samples a song by that artist to recommend to the user. The user may choose to skip the song if she does not enjoy it and move to the next song. From such repetitive feedback, the system wants to learn as fast as possible a set of artists that the user likes, giving her an incentive to continue to use the service. The present invention includes mixing strategies over multiple bandits embedded in the social networks of new users.

Initially, the mathematical framework for the setting of multi-armed bandit use in a recommender system, such as a music recommender system, utilizing social network data is established as follows. Consider a social graph $G = (V, E)$ and reserve letters u and $v$ to denote vertices of this graph, i.e., users of a music recommender system. The set of neighbors of a vertex u is $N(u) := \{v \in V \,|(u, v) \in E\}$. The scenario includes a user u that just joined the music recommender service, indicating neighbors $v \in N(u)$ that are already known to the recommender system. The recommender system has already collected information on the new user's social network friends (neighbors) through their listening history. As an aspect of the present invention, this social network neighbor listening history is leveraged to improve the performances of a multi-armed bandit $B_u$ associated with user u. Modeling of user preferences through their implicit feedback (play counts) and the use of define the bandits $\{B_u\}$ is described herein below.

A K-armed bandit problem is defined by K distributions $P_1, ..., P_K$, one for each "arm" of the bandit, with respective means $p_1, ..., p_K$. When the decision maker pulls (plays) arm $a$ at time t, she receives a reward $X_{a,t} \sim P_a$. All rewards $\{X_{a,t}, a \in 1, K, t \geq 1\}$ are assumed to be independent. Assume that all $\{P_a\}$ have support in [0,1]. The mean estimate for $E[X_{a,\cdot}]$ after m steps is

$$\overline{X}_{a,m} := \frac{1}{m}\sum_{s=1}^{m} X_{a,s}.$$

The standard measure of a bandit's performances is its expected (cumulative) regret after T steps, defined as

$$E[R(T)]:= \sum_{t=1}^{T} E\left[X_{a^*,t} - X_{I(t),t}\right]$$

where $a^* = \arg\max\{p_a\}$ and $I(t)$ is the index of the arm played at time t. Another (equivalent) measure is the average per-step reward, up to the current step $n$:

$$r(T):= \frac{1}{T}\sum_{t<T} X_{I(t)} \Rightarrow E[r(T)] = p^* - \frac{1}{T}E[R(T)]. \tag{1}$$

A reward profile of a strategy is defined as a function $t \to r(t)$ mapping any time step $t \in 1, T$ to the average per-step reward up to time t of a given run, as defined in Equation (1). For a run of bandit $B_u$, the number of times arm $a$ has been pulled (played) up to time t is denoted by $n_{u,a}(t)$ and the corresponding reward estimate is denoted by $\overline{X}_{u,a}(t)$. Denoted by $\boldsymbol{n}_u$ and $\overline{\boldsymbol{X}}_u$ are the sample-size and estimate vectors (indexed by arms), respectively.

The k-hop ego-centric (social) network of user u is defined as the sub-graph of G comprising u and all vertices that are less than k hops away from u. Each user u has listened to a given set of artists $\boldsymbol{A}_u$, and for $a \in \boldsymbol{A}_u$, denoted by $pc_u[a]$ (play counts) are the number of times u has listened to any song from $a$. Thus, the probability that a song sampled uniformly from u's listening history comes from $a$ is

$$\pi_{u,a}:= \frac{pc_u[a]}{\sum_{a\in A_u} pc_u[a]}.$$

Within the mathematical framework, each user u is associated with a multi-armed bandit $B_u$ whose arms correspond to artists $a \in A_u$. During consecutive steps t, the bandit strategy picks an artist $a \in A_u$ and suggests them to u; the reward is 1 if u accepts the recommendation and 0 otherwise. This reward is modeled as a random variable following a Bernoulli distribution $B(p_{u,a})$, where $p_{u,a} = \mathbb{P}\left[u \text{ likes a song from } a\right]$ will be modeled from the data.

It has been established that user play counts distributions tend to follow a power law. Therefore, using $\pi_{u,a}$ as ground-truth $p_{u,a}$ would result in putting all the weight on a single artist and give similar losses to the others, a learning problem where one would only discover the top artist. In addition, a fast learning of a set of top-artist is of interest. An effective solution is to transform $\pi_u$ using a logistic function and define $\boldsymbol{p}_u$ as:

$$p_{u,a}:= \frac{1}{1 + e^{-\gamma_u(\pi_{u,a}-v_u)}}, \tag{2}$$

where $\gamma_u$ and $v_u$ are scalars defined with respect to the complete distribution $\pi_u$. The inventors experimentally found the values $v_u:= \text{median}(\pi_u)$ and $\gamma_u:= 5/v_u$ to discriminate well between the most and least liked artists in the crawled artist sets.

The present novel solutions follow two steps: (1) compute a set $S_u$ of artists that $u$ may like, then (2) learn online the top artists of u in $S_u$. If focused on the first recommendations made to u, it is desirable to keep $|S_u|$ reasonably small: otherwise, by the time the learning algorithm has tried every action once, one wouldn't be in a cold start situation any more. $S_u$ is defined as

$$S_u:= \bigcap_{v\in N(u)} A_v, \tag{3}$$

i.e., artists that all the new users' neighbors have heard of. This follows the homophily property that users are more likely to listen and like artists that they friends listen to. Taking a strict intersection is a conservative option; a more general approach would be to consider artists that at least *k* neighbors have heard of, *i.e.*, $S_u := \cup_{\{v_1,\ldots,v_k\}\subset N(u)} \cap_{i=1}^{k} A_{v_i}$.

Notation for the model is given in Table 1.

Table 1. Notations

| | |
|---|---|
| $N(u)$ | neighborhood of user *u* |
| $A_u$ | set of artists user *u* has listened to |
| $S_u$ | set of artists to suggest to user *u* |
| $pc_u[a]$ | # times user *u* listened to artist *a* |
| $p_{u,a}$ | $\mathbb{P}$ [user *u* likes a song from artist *a*] |
| $\overline{X} = (X_a)$ | estimate vector (intrinsic) |
| $\overline{Y} = (Y_a)$ | estimate vector (from neighbors) |
| $n = (n_a)$ | sample-size vectors |
| $r$ | reward profile of a strategy |
| $b, c$ | confidence radii |

To summarize, a multi-armed bandit $B_u$ is associated with cold-start user u. The arm set of $B_u$ is $S_u$ c $A_u$, and the expected reward of arm $a \in S_u$ is $p_{u,a}$ is as defined by Equation (2). Similarly, each neighbor $v \in$ N(u) has a bandit $B_v$. Assume that these neighbors are already subscribers of the recommender system and their respective bandits $B_v$ have been trained when new user u joins the service. One goal of the strategies is to learn $B_u$'s optimal arms as fast as possible.

Three strategies are described herein below. The first, known as UCB1 is known to those of skill in the art. The next two strategies, Mix Pair and Mix Neigh are novel aspects of the invention. The first strategy is the well-known UCB1 policy which is used as a baseline. The two novel strategies combine information from both the current bandit $B_u$ and neighboring bandits $\{B_v\}_{v \in N(u)}$.

One of the most prominent algorithms in the stochastic bandit literature, UCB1 achieves a logarithmic expected regret:

$$E[R(t)] = O(\log t) \iff E[r(t)]t \to \infty \sim p^* - \frac{\kappa \log t}{t}$$

for some constant $\kappa$. This is optimal in terms of the number of steps t, *i.e.*, the asymptotic regret of any multi-armed bandit strategy is $\Omega(\log t)$. UCB1 chooses which arm *a* to play at time t based on an Upper Confidence Bound (UCB), which is the sum of two terms: the empirical average $\overline{X}_a$ on its past rewards, and a *bias* term $b_a(t) := \sqrt{2 \log t / n_a}$,

which is a confidence bound on the exactness of $\overline{X}_a$. The arm chosen is the one maximizing the sum of these two terms. Intuitively, an arm is thus played because it has either high historical rewards or its outcome is uncertain. This strategy is summarized in the Algorithm 1 below.

Algorithm 1: UCB I

1. $\overline{X}, n \leftarrow 0, 0$
2. for $t \geq 1$ do
3. $a \leftarrow a \in S_u \arg \max \{\overline{X}_a + \sqrt{2 \log (t)/n_a}\}$
4. **pull** arm *a*, getting reward $X_{a,t}$
5. $n_a \leftarrow n_a + 1$
6. $\overline{X}_a \leftarrow 1/n_a X_{a,t} + (1 - 1/n_a)\overline{X}_i$

In one aspect of the invention, the MixPair strategy considers single edges (u, *v*) $\in$ *E* of the social graph, where user u is a cold-start user and the system has already collected a listening history for *v*. Following the intuition that u

and $v$ have similar tastes, the novel MixPair strategy computes upper confidence bounds based on all samples seen so far, both from $B_u$ and $B_v$.

**[0027]** Formally, denoted by $\overline{X}(t)$ and n(t) (resp. $\overline{Y}$ and m) the estimate and sample-size vectors of $B_u$ (resp. $B_v$) after $B_u$ has been played t times. Assume that neighboring bandits are not being played while $B_u$ is trained, hence $\overline{X}(t)$ and n(t) are parametrized by $t$ while $\overline{Y}$ and $\boldsymbol{m}$ are step-independent. For an arm $a \in S_u$, $\overline{Z}_a(v)$ is defined as:

$$\overline{Z}_a(v) := \frac{n_a(t)}{n_a(t) + m_a}\overline{X}_a(t) + \frac{m_a}{n_a(t) + m_a}\overline{Y}_a,$$

$$b_a(v,t) := \sqrt{\frac{2\,log\ t}{n_a(t) + m_a}}.$$

**[0028]** MixPair is an Upper Confidence Bound strategy, using $\overline{\boldsymbol{Z}}(v)$ and $\boldsymbol{b}(v,\cdot)$ as its exploitation and bias term, respectively. As emphasized by its name, it is designed for a pair of neighbors (u, $v) \in E$, while $|N(u)|$ is often more than 1. To aggregate data from the whole neighborhood, the neighbor $v$ is then re-sampled from $N(u)$ at the beginning of each step $t$. Algorithm 2 summarizes the complete strategy. Algorithm 2: MixPair

1. $\overline{\boldsymbol{X}}, \boldsymbol{n} \leftarrow$ **0, 0**
2. for t $\geq$ 1 do
3. **pick** $v \in N(u)$
4. $a \leftarrow a \in S_u$ arg max $\{\overline{Z}_a(v) + b_a(v, t)\}$
5. pull arm $a$, getting reward $X_{a,t}$
6. $n_a \leftarrow n_a + 1$
7. $\overline{X}_a \leftarrow 1/n_a X_{a,t} + (1 - 1/n_a)\overline{X}_i$

**[0029]** Note that t here only accounts for the number of times bandit $B_u$ has been played, which biases MixPair towards exploitation on arms $a$ for which $m_a$ is large (which should also correspond to high-reward arms in $B_v$ if its regret is small). There are multiple sampling processes that can be used at line 3 of Algorithm 2. Considered are two solutions: Uniform sampling, based on the assumption that all neighbors are evenly homophilous to user u, and "Bandit" sampling where a multi-armed bandit is defined calculating on neighbors $v \in N(u)$, and learning the most similar ones online. In the "Bandit" sampling, a separate multi-armed bandit is run over all of the neighbors to pick the neighbor which is the closest to the new user.

**[0030]** The novel MixPair strategy combines bandit estimates, and then aggregates them on the neighborhood through sampling. The next novel strategy termed MixNeigh, works the other way round: reward estimates are first aggregated from all neighbors, and then the better of the aggregate and the user's empirical estimate is chosen using a heuristic based on confidence radii, as explained below.

**[0031]** Formally, consider a user u and an artist $a \in S_u$. Let $X_a$: = $\{\overline{X}_{v,a};\ v \in N(u)\}$ denote the set of empirical estimates for arm $a$ in all neighboring bandits, with its average $\overline{Y}_a$: = avg($X_a$) and standard deviation $c_a$: = $\sigma(X_a)$. Algorithm 3 describes the MixNeigh strategy. At each step t, it decides between estimates $\overline{X}_{u,a}$ and $\overline{Y}_a$ of the reward for arm $a$ based on a confidence criterion.

Algorithm 3: MixNeigh

Require: neighbor estimates $\overline{Y}_a$, $c_a$ for all $a \in S_u$

1. $\overline{\boldsymbol{X}}$, **n** $\leftarrow$ **0, 0**
2. $t \geq 1$do
3. for $a \in S_u$ do
4. $b_a \leftarrow \sqrt{\frac{2\,log\ t}{n_a}}$
5. $\overline{Z}_a \leftarrow \begin{cases} \overline{Y}_a & \text{if} |\overline{X}_a - \overline{Y}_a| < \frac{b_a - c_a}{2} \\ \overline{X}_a & \text{otherwise} \end{cases}$
6. $a \leftarrow a \in S_u$ arg max $\{\overline{Z}_a\}$
7. **pull** arm $a$, getting reward $X_{a,t}$

8. $n_a \leftarrow n_a + 1$
9. $\overline{X}_a \leftarrow 1/n_a X_{a,t} + (1 - 1/n_a)\overline{X}_i$

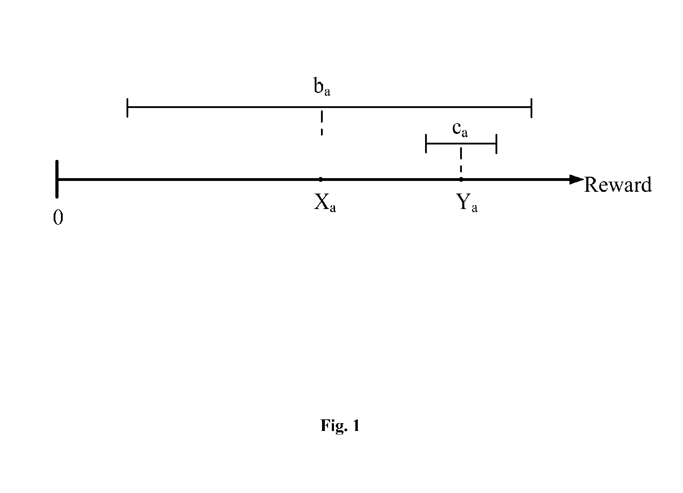

This criterion can be interpreted as follows: at step $t$, $b_a$ is such that $p_a$ lies with high probability in the interval $[\overline{X}_a - b_a/2; \overline{X}_a + b_a/2]$; similarly, interpret $c_a$ as confidence radius on $\overline{Y}_a$. When $[\overline{Y}_a - c_a/2; \overline{Y}_a + c_a/2] \subset [\overline{X}_a - b_a/2; \overline{X}_a + b_a/2]$, MixNeigh chooses it as the estimate for $p_{u,a}$, a case illustrated in Figure 1. A reward line segment is shown plotting $\overline{X}_a$ and $\overline{Y}_a$. In the instance of Figure 1, the confidence interval $c_a$ for $\overline{Y}_a$ is smaller than the confidence interval $b_a$ for $\overline{X}_a$, so, according to Algorithm 3, $\overline{Y}_a$ is chosen. Otherwise, $\overline{X}_a$ is deemed as the best option. The intuition behind this heuristic is to use $\overline{Y}_a$ when it is both a more precise estimate than $\overline{X}_a$ and an admissible value for $p_{u,a}$.

According to the inventor's evaluations, the MixNeigh strategy interpolated nicely between using the neighborhood estimate $\overline{Y}_a$ as a prior, and exploiting the empirical estimate $\overline{X}_a$ when its precision had become good enough.

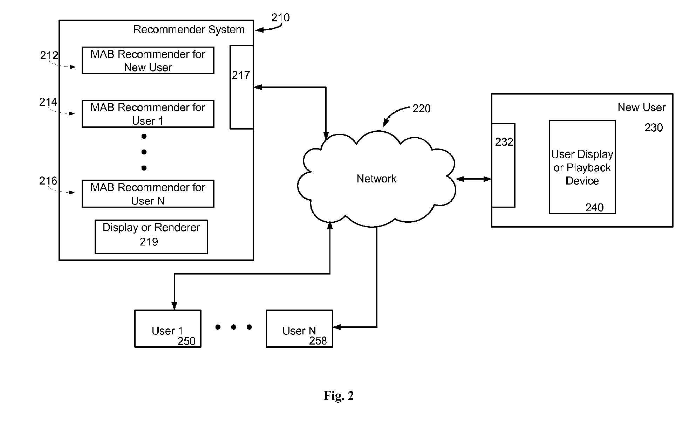

Figure 2 depicts one example environment of the invention where a recommender system 210 contains multiple multi-armed bandits (MABs). There is a MAB for the new user 212 and MABs for a plurality of N established users labeled as items 214 through 216. In the current context a user, such as user N 258 represent the user equipment of a person that uses the recommender system 210. The recommender system 210 may be part of a service provider; such as a provider of digital content such as movies, music or digital books. One of skill in the art will recognize that any type of digital content may be available in the recommender system 210. In another embodiment, recommender system 210 can be a server or a stand alone system which functions as a recommender system for one or multiple content providers. Recommender system 210 also contains a local display or renderer to allow a system manager to view results and statistics of any type for MAB of any user of the recommender system. A network interface 217 enabled with transceivers (transmitters and receivers) to facilitate access to network 220.

Network 220 can be any sort of public or private network such as a private or public LAN, WAN, WLAN, or the like. Users of the recommender system are also connected to the network 220. For example, established one established user 250 may be typical of user N 258 where those established users utilize the recommender system 210 and have resident there corresponding MAB 214 to 216 respectively. Those multi-armed bandits 214-216 are assumed to have a history of providing recommendations to their respective users. Also, Users 250-258 are considered to be within a social network graph of the new user 230.

New user 230 is considered a user having little or no history of using the recommender system 210. However, as stated above, established users 250-258 are considered the friends or neighbors of new user 230. The device of new user 230 contains a display 240 useful for generating requests for a recommendation item, viewing or playing back the recommended item, and providing feedback concerning the recommended item. Such traffic flows from the new user device 230 via network interface 232 to and from the recommender system 210 via the network 220. The recommender system embodiment shown in Figure 2 allows a new user to utilize the well-established MAB recommenders 214-216 of her social network neighbors to obtain useful cold start recommendations before the MAB of the new user 212 is fully trained.

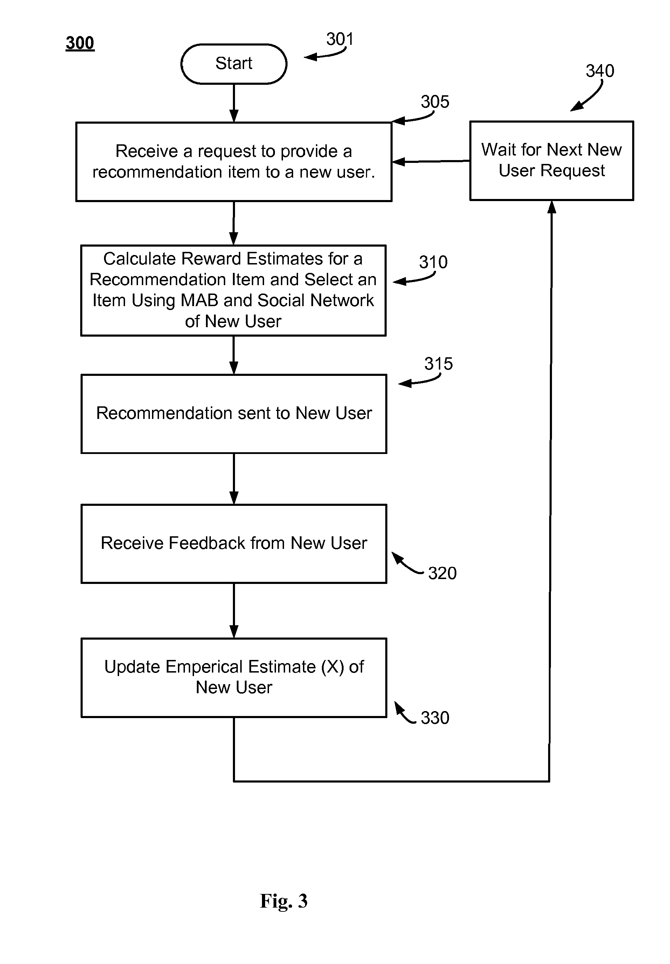

Figure 3 depicts a sample method 300 for an embodiment such as that shown in Figure 2. The method 300 functions to provide a new user of a recommender system that does not have much history with her dedicated multi-armed bandit of the recommender system to receive useful cold start recommendations based on the recommendations of her social network neighbors that also use the recommender system 210. The method 300 is typically performed by the recommender system, such as that shown in Figure 2.

The method 300 begins at step 301. At step 305 a request is received to provide a recommendation item to a new user. As discussed before, the recommendation item can be any type of content such as a movie, music, book, or article for sale that the user may have interest in renting, viewing, or purchasing. In one embodiment, the request is generated by the new user device 230 where the new user is attempting to use the recommender system 210 for perhaps the first time or first few times. In another embodiment, the request received is generated by the recommender system 210 itself for targeting content that is sent to the new user. In either event, the request is received by the recommender system 210.

At step 310, the recommender system calculates reward estimates for recommendation items available for the new user to consider. According to aspects of the invention, the reward estimates are for recommendation items based on the new users reward estimates as well as reward estimates for recommendation items based on the social network neighbors of the new user. Also at step 310, a selection is made of the recommendation item having the highest reward estimate considering the mixture of both the empirical new user reward estimates and the neighbor reward estimates. Step 310 represents the calculation and selection steps of the example MixPair algorithm 2 and the example MixNeigh algorithm 3. In either case, a plurality of multi-armed bandits is used; one for the new user and multi-armed bandits of the social network neighbors of the new user.

After selection of a recommendation item from one of the novel mixture algorithms presented above, the method 300 move to step 315 where the recommendation item is sent to the new user. This can be accomplished by having the recommender system 210 send the user 230 the selected recommendation item across the network 220 via network interface 217 and 232. At step 320 the new user reviews the received selected recommendation item and transmits feedback to the recommendation system 210. The recommendation system 210 receives the feedback. The feedback can take many forms, such as acceptance or rejection of the recommended item. Rejection of the recommended item can be implicit by the placement of a new request sent by the new user. Alternately, rejection of the recommended item can be an explicit rejection. Acceptance of the recommended item can be represented by the viewing, playing, purchase, or rental of the recommended item as well as a simple indication of acceptance. In another embodiment, the new user can rate the recommended item and the rating can be translated into an acceptance or rejection.

At step 330, an update to the user's empirical estimate (Xa) is updated as a result of the feedback received from the new user. This is represented as line 7 of algorithm 2 or line 9 of algorithm 3. The feedback, provided by the new user over time, will eventually enhance the multi-armed bandit model of the new user such that the bandit will begin to generate high reward recommendations to the new user. Essentially, continued feedback moves the new user out of the cold start regime. At step 340, the process 300 waits for the next new request to be received by the recommender system. When a request is received by the recommender system, the process is repeated at step 305.

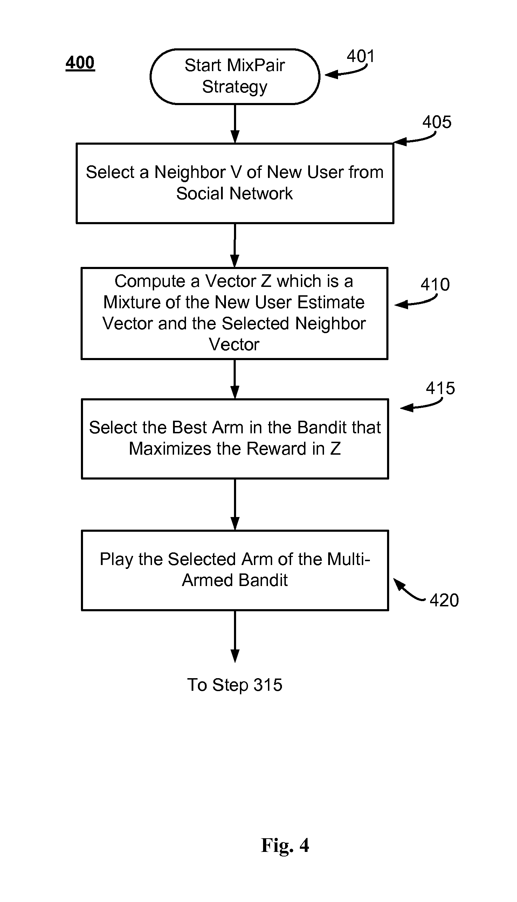

Figure 4 depicts a method 400 of an example MixPair strategy according to aspects of the invention. Either the novel MixPair strategy or the novel MixNeigh strategy may be used at step 310 of Figure 3. The MixPair strategy method 400 begins at step 401 to select a neighbor at step 405. The neighbor selected at step 405 is a neighbor selected from the social network of the new user. Example neighbors each have established multi-armed bandit models such as those shown in Figure 2 items 214-216. The selection of a social network neighbor can be performed by either selecting a social network neighbor randomly or by selecting a neighbor using a separate multi-armed bandit. In the selection option using the separate multi-armed bandit, the separate bandit evaluates the neighbors of the new user and determines which one may have the closest profile to that of the new user. Once selected, the method 400 moves to step 410.

At step 410, a vector Z is computed that contains a mixture of a reward estimate of the new user and a reward estimate of the selected neighbor. This novel mixture of reward estimates is used in step 415 to select the best arm of the multi-armed bandit used for the new user. The best arm is selected such that the reward is that that maximizes the reward of the mixture Z. The selected arm corresponds to a specific recommendation item. At step 420 the selected arm of the multi-armed bandit is played. At this point the MixPair method 400 returns to the method 300 of Figure 3 where the selected recommended item is sent to the user at step 315.

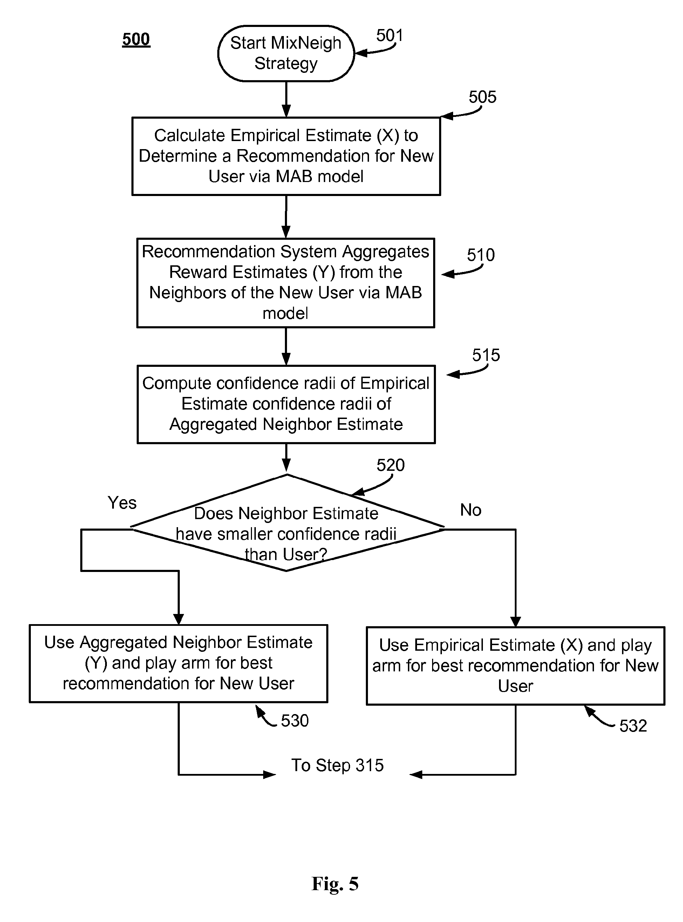

As an alternative to the MixPair strategy, the Mix Neigh strategy can be used in step 310 of Figure 3. Both the MixPair and MixNeigh strategies use a plurality of multi-armed bandits from both the new user and the social network neighbors of the new user to determine a recommendation item. Figure 5 depicts a method 500 of an example MixNeigh strategy according to aspects of the invention. The MixNeigh strategy method 500 begins at step 501 to calculate an empirical estimate X using the new user multi-armed bandit model at step 505. An example new user multi-armed bandit is depicted in the recommender system 210 at item 212. At step 510 the method 500 aggregates rewards estimates Y from the social network neighbors of the new user. This represents a mixing of a plurality of multi-armed bandits of the social network of the new user. Each of the plurality of social network neighbors have established multi-armed bandit models such as those shown in Figure 2 items 214-216.

At step 515, confidence radius of the empirical reward estimate of the user multi-armed bandit is calculated. Confidence radius of the aggregated neighbor reward estimate is also calculated. At step 520, the two estimates are compared. If the mixed neighbor reward estimate has a smaller confidence radius than the empirical estimate of the user, then step 520 moves to step 530. At step 530, the aggregated neighbor estimate Y is used. This results in a selection of the aggregated or mixed multi-armed bandit estimate being played as the best recommendation for the new user. If at step 520, the confidence radius of the mixed neighbor reward estimate does not have a smaller confidence radius than the empirical estimate of the user, then the empirical estimate of the new user is the better estimate and the method moves from step 520 to step 532. At step 532, the empirical estimate X is used to play a recommendation item for the new user. Essentially, the reward estimate outcome with the smallest confidence interval is used to play the arm. At the output of either step 530 or step 532, the method 500 moves back to step 315 of Figure 3, where the selected recommendation item is transmitted to the new user for her consideration.

Figures 6a and 6b are depictions of the origin of recommendation items that are sent to the new user over time. Figure 6a depicts example outcome recommendation items sent to the new user as a result of using the MixPair strategy. Since the MixPair strategy uses a mixture of a reward estimate of a close social network neighbor along with the user empirical reward estimate, then the cold start recommendations are all a mixture of a neighbor and the user (MIX N+U) reward estimates from their respective multi-armed bandits. Later, when the cold start recommendations are not needed because the user's multi-armed bandit has been well trained, the recommendation origins are from the user's reward estimates (U) from the user's multi-armed bandit.

Figure 6b depicts example outcome recommendation items sent to the new user as a result of using the MixNeigh strategy. Since the MixNeigh strategy uses a mixture of a reward estimates of social network neighbors or the user empirical reward estimate, then the cold start recommendations are either a mixture of a neighbors rewards (MIX Ns) from the neighbors multi-armed bandits or from the user's empirical reward estimate (U) from the user's multi-armed bandit. In the cold start epoch, the mixture of neighbors' reward estimates dominates the origin with just a few user reward estimate origins appearing. Later, when the cold start recommendations are not needed because the user's multi-armed bandit has been well trained, the recommendation origins are predominately from the user's reward estimates (U) from the user's multi-armed bandit.

Figure 7 is an example block diagram 700 of the recommender system 210 of Figure 2. The block diagram configuration includes a bus-oriented 715 configuration interconnecting a processor 720, memory 730, and various multi-armed bandit reward estimators. The multiple multi-armed bandit reward estimators may be configured as hardware, firmware or software, or a combination of hardware and firmware or software. In one embodiment, the multi-armed bandit estimators may all be located in the processor or as software instruction in memory accessible by the processor.

The configuration of Figure 7 also includes a network interface 710 which allows access to a private or public network, such as a corporate network or the Internet, either via wired or wireless interface. Traffic via network interface 710 includes but is not limited to requests for recommendation items, selected recommendation items, feedback from users, and the like to accommodate the aspects of the invention. Also included is a local input/output interface 760 for local display of any data item crossing the network interface 710 or of any operation or status of any the multi-armed bandit models contained within the recommender system.

Processor 720 provides computation functions for the recommender system depicted in figure 2, item 210. The processor 720 can be any form of CPU or controller that utilizes communications between elements of the recommender system to control communication and computation processes for the system. Those of skill in the art recognize that bus 715 provides a communication path between the various elements of embodiment 300 and that other point-to-point interconnection options instead of a bus architecture are also feasible.

Memory 330 can act as a repository for memory related to any of the methods that incorporate the functionality of the recommender system. Memory 330 can provide the repository for storage of information such as program memory, downloads, uploads, or scratchpad calculations. Those of skill in the art will recognize that memory 330 may be incorporated all or in part of processor 320. Processor 320 utilizes program memory instructions to execute a method, such as method 300 of Figure 3, to process rewards of a plurality of multi-armed bandit models and to produce outputs representing recommendation items and process monitoring. Network interface 310 has both receiver and transmitter elements for network communication as known to those of skill in the art.

New User multi-armed bandit rewards estimator 740 serves as an estimate calculator for the empirical estimates of the user's multi-armed bandit. Likewise, the multi-armed bandit reward estimators of Users 1 through users N, represented by items 750-758 are used as estimation engines for established users. As noted above, any of the multi-armed bandit reward estimators can be a hardware implementation or a combination of hardware and software/firmware. Alternately, multi-armed bandit reward estimators may be implemented as a co-processors responding to processor 720. In an alternative configuration, processor 720 and the multi-armed bandit reward estimators 740 and 750-758 may be integrated into a single processor.

Although specific architectures are shown for the implementation of an analysis engine such as that of example embodiments of Figures 4a and 4b, one of skill in the art will recognize that implementation options exist such as distributed functionality of components, consolidation of components, and location in a server as a service to recommender systems. Such options are equivalent to the functionality and structure of the depicted and described arrangements.

**Claims**

1. A method performed by a recommender system to recommend items to a user, the method comprising:

    receiving a request to provide a user with a recommendation for an item;
    calculating reward estimates and selecting a recommendation item for the user, the calculation dependent upon both user reward estimates for recommendation items using a multi-armed bandit model of the user and neighbor reward estimates for recommendation items using a multi-armed bandit model of at least one user neighbor in a social network of the user;
    sending the selected recommendation item to the user; and
    receiving feedback from the user concerning the selected recommendation.

2. The method of claim 1, further comprising updating an empirical estimate of a user reward.

3. The method of claim 1, wherein receiving a request comprises receiving the request from the user.

**4.** The method of claim 1, wherein calculating rewards and selecting a recommendation item for the user comprises the steps of:

selecting a social network neighbor of the user from the social network;
computing a mixed reward vector of estimated user rewards and the selected neighbor rewards;
selecting an arm of a multi-armed bandit that maximizes a reward of the mixed reward vector; and
playing the selected arm.

**5.** The method of claim 4, wherein selecting a social network neighbor comprises selecting a neighbor at random, or selecting a neighbor that maximizes a reward in a multi-armed bandit that considers rewards from a plurality of social network neighbors of the user.

**6.** The method of claim 4, wherein playing the selected arm comprises sending a recommendation item to the user that corresponds to the selected arm.

**7.** The method of claim 1, wherein calculating rewards and selecting a recommendation item for the user comprises the steps of:

calculating an empirical estimate for a recommendation item using the user preferences in a multi-armed bandit model of the user;
calculating an aggregate of neighbor estimates of a recommendation item using a plurality of neighbor preferences of a multi-armed bandit model of a plurality of neighbors;
computing confidence radii of the empirical estimate and the aggregate of neighbor estimates;
determining a smallest computed confidence radius; and
playing an arm corresponding to a recommendation item having the smallest confidence radius.

**8.** The method of claim 7, wherein playing an arm corresponding to a recommendation item comprises sending a recommendation item to the user.

**9.** The method of claim 1, wherein receiving feedback from the user concerning the selected recommendation comprises receiving an indication that the user sampled the selected recommendation item.

**10.** An apparatus to recommend items to a user, the apparatus comprising:

a network interface that acts to receive a request to provide a user with a recommendation for an item;
a processor having access to a plurality of multi-armed bandit estimators that act to calculate rewards dependent upon both user preferences in a multi-armed bandit model of the user and neighbor preferences of a multi-armed bandit model of at least one user neighbor in a social network of the user, the processor selecting an arm of one of the multiple multi-armed bandits to determine a selected recommendation item to the user;
wherein the selected recommendation item is transmitted to the user over the network interface, and the apparatus receives feedback from the user via the network interface.

**11.** The apparatus of claim 10, wherein the multi-armed bandit model of the user and the multi-armed bandit model of at least one user neighbor are located in the apparatus.

**12.** The apparatus of claim 10, wherein the apparatus comprises a recommender system of a content provider.

**13.** The apparatus of claim 12, wherein the network interface provides access to a network interconnecting the user and at least one social neighbor of the user.

**14.** The apparatus of claim 10, wherein the processor executes instructions which causes the apparatus to perform the acts of:

selecting a social network neighbor of the user from the social network;
computing a mixed reward vector of estimated user rewards and the selected neighbor rewards;
selecting an arm of the multi-armed bandit of the user that maximizes a reward of the mixed reward vector; and
playing the selected arm.

**15.** The apparatus of claim 10, wherein the processor executes instructions which causes the apparatus to perform the acts of:

calculating an empirical estimate for a recommendation item using the user preferences in the multi-armed bandit model of the user;
calculating an aggregate of neighbor estimates of a recommendation item using a plurality of neighbor preferences of the multi-armed bandit model of a plurality of neighbors;
computing confidence radii of the empirical estimate and the aggregate of neighbor estimates;
determining a smallest computed confidence radius; and
playing an arm corresponding to a recommendation item having the smallest confidence radius.

Fig. 1

Fig. 2

**300**

Start ← 301

Receive a request to provide a recommendation item to a new user. ← 305

Wait for Next New User Request ← 340

Calculate Reward Estimates for a Recommendation Item and Select an Item Using MAB and Social Network of New User ← 310

Recommendation sent to New User ← 315

Receive Feedback from New User ← 320

Update Emperical Estimate (X) of New User ← 330

**Fig. 3**

**400**

Start MixPair
Strategy 401

Select a Neighbor V of New User from
Social Network 405

Compute a Vector Z which is a
Mixture of the New User Estimate
Vector and the Selected Neighbor
Vector 410

Select the Best Arm in the Bandit that
Maximizes the Reward in Z 415

Play the Selected Arm of the Multi-
Armed Bandit
420

To Step 315

**Fig. 4**

**500**

Fig. 5

**600**

610

| MIX N+U | MIX N+U | MIX N+U | MIX N+U | MIX N+U | MIX N+U | MIX N+U | MIX N+U |

● ● ●

620

| U | U | U |

|←— t —→|

|←————————————— Cold Start Recommendations —————————————→|

|←— Later Recommendations —→|

**Fig. 6a**

640

| MIX Ns | MIX Ns | MIX Ns | MIX Ns | U | MIX Ns | U | MIX Ns |

● ● ●

650

| U | U | U |

|←— t —→|

|←————————————— Cold Start Recommendations —————————————→|

|←— Later Recommendations —→|

————————————→ time

**Fig. 6b**

<u>700</u>

To / From Network

**Fig. 7**

Europäisches
Patentamt

European
Patent Office

Office européen
des brevets

**EUROPEAN SEARCH REPORT**

Application Number

EP 13 30 5849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP", 20071101, 1 November 2007 (2007-11-01), XP007905525, * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q10/04 G06Q30/02 G06Q50/00 <br><br> TECHNICAL FIELDS SEARCHED (IPC) <br><br> G06Q |

The present search report has been drawn up for all claims

| Place of search | Date of completion of the search | Examiner |
|---|---|---|
| The Hague | 23 September 2013 | Cîrstet, Andrei |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)